# EUROPÄISCHE PATENTANMELDUNG

(11) **EP 4 053 439 A1**
(43) Veröffentlichungstag der Anmeldung: **07.09.2022**
(21) Anmeldenummer: 22155891.9
(22) Anmeldetag: 09.02.2022
(51) Int. Cl.: F16K 7/06, F16K 7/07

(54) **QUETSCHVENTIL**

(30) Priorität: 01.03.2021 DE 102021201913
(71) Anmelder: Festo SE & Co. KG, 73734 Esslingen (DE)
(72) Erfinder: Bochterle, Dr. Jörg, 72135 Dettenhausen (DE); Kunze, Manuel, 89134 Blaustein (DE)
(74) Vertreter: Patentanwälte Magenbauer & Kollegen Partnerschaft mbB

(57) **Zusammenfassung**

Bei einem Quetschventil, mit einem Ventilgehäuse (12), in dem sich zwischen zwei Fluidanschlüssen (18) ein eine flexible Umfangswand (20) aufweisendes schlauchförmiges Ventilglied (21) erstreckt, das zwei an einander entgegengesetzten Enden des Ventilglieds (21) ausgebildete ringförmige Fixierabschnitte (23) aufweist, die jeweils im Bereich der Fluidanschlüsse (18) fixiert sind und zwischen denen sich die flexible Umfangswand (20) erstreckt, wobei die Umfangswand (20) in einer Quetschrichtung quer zur Ventilglied-Längsachse (25) mittels Quetschmitteln (24) in einem Quetschraum (32) zusammenquetschbar ist, um den Durchflussquerschnitt zu verändern, und wobei das Ventilglied (21) von einem seine radiale Aufweitung begrenzenden starren Stützrohr (27) umschlossen ist, das wenigstens eine in den Quetschraum (32) einmündende radiale Durchbrechung (33a, b) für die Quetschmittel (24) aufweist, wobei quer zur Quetschrichtung beidseits der Ventilglied-Längsachse (25) angeordnete, sich entlang der Ventilglied-Längsachse (25), in Richtung zu einem der Fixierabschnitte (23) erstreckende Ausweichräume (36a-d) zur Aufnahme des zusammengequetschten Teils des Umfangswand (20) ausgebildet sind, enden die Ausweichräume (36a, b) jeweils mit Abstand vor den Fixierabschnitten (23) enden.

## Beschreibung

Die Erfindung betrifft ein Quetschventil, mit einem Ventilgehäuse, in dem sich zwischen zwei Fluidanschlüssen ein eine flexible Umfangswand aufweisendes schlauchförmiges Ventilglied erstreckt, das zwei an einander entgegengesetzten Enden des Ventilglieds ausgebildete ringförmige Fixierabschnitte aufweist, die jeweils im Bereich der Fluidanschlüsse fixiert sind und zwischen denen sich die flexible Umfangswand erstreckt, wobei die Umfangswand in einer Quetschrichtung quer zur Ventilglied-Längsachse mittels Quetschmitteln in einem Quetschraum zusammenquetschbar ist, um den Durchflussquerschnitt zu verändern, und wobei das Ventilglied von einem seine radiale Aufweitung begrenzenden starren Stützrohr umschlossen ist, das wenigstens eine in den Quetschraum einmündende radiale Durchbrechung für die Quetschmittel aufweist, wobei quer zur Quetschrichtung beidseits der Ventilglied-Längsachse angeordnet, sich entlang der Ventilglied-Längsachse, in Richtung zu einem der Fixierabschnitte erstreckende Ausweichräume zur Aufnahme eines zusammengequetschten Teils des Schlauchabschnitts ausgebildet sind.

Quetschventile sind bereit seit Langem bekannt und können als sogenannte proportionale Medienventile eingesetzt werden. Proportional bedeutet, dass sich das Quetschventil kontinuierlich schließen und öffnen lässt, um damit beliebige Durchflüsse einzustellen.

Ein Quetschventil der eingangs erwähnten Art ist beispielsweise aus der DE 10 2007 006 764 B3 bekannt. Bei diesem Quetschventil wird ein Stützrohr eingesetzt, das aus zwei Halbschalen besteht, in die das schlauchförmige Ventilglied eingelegt ist. Die Innenkontur dieser Halbschalen ist so gewählt, dass sie im eingebauten Zustand oben und unten an der Umfangswand des schlauchförmigen Ventilglieds anliegt. Entlang der Nahtstelle der Schalen besteht zwischen den Schalen und der Umfangswand des schlauchförmigen Ventilglieds ein Arbeitsraum, in den sich der Schlauch beziehungsweise die Membran ausdehnen kann, sobald sie von oben und unten durch die Quetschmittel gequetscht wird. Da das schlauchförmige Ventilglied im Bereich der beiden Fluidanschlüsse über deren ringförmige Fixierabschnitte nach wie vor kreisrund eingespannt ist, geht die ovale Form mit Bereich des Arbeitsraums entlang der Symmetrieachse kontinuierlich in einen runden Querschnitt über.

Beim Betrieb von Quetschventilen insbesondere zur Durchflusssteuerung flüssiger Prozessmedien kann es vorkommen, dass das schlauchförmige Ventilglied anfängt zu flattern. Das Flattern ist ein Wechsel zwischen zwei Zuständen. Im einen Fall ist der Öffnungswinkel nach der Engstelle sehr gering und die Strömung liegt an der flexiblen Umfangswand, insbesondere Membran, an. Im anderen Fall ist der Öffnungswinkel des Diffusors so groß, dass es zu einem Strömungsabriss kommt. Bei bestimmten Arbeitspunkten verformt sich die Umfangswand durch die Strömungskräfte periodisch so, dass sich beide Zustände mehrmals in der Sekunde abwechseln, was als Flattern wahrgenommen wird. In diesem Fall ist die Einstellung eines definierten Durchflussquerschnitts oder das komplette Absperren des Durchflusses nicht zuverlässig möglich.

Aufgabe der Erfindung ist es daher, ein Quetschventil der eingangs erwähnten Art zu schaffen, das im Betrieb zuverlässig arbeitet.

Diese Aufgabe wird durch ein Quetschventil mit den Merkmalen des unabhängigen Anspruchs 1 gelöst.

Das erfindungsgemäße Quetschventil zeichnet sich dadurch aus, dass die Ausweichräume jeweils mit Abstand vor den Fixierabschnitten enden.

Dadurch ist die Länge, auf der die flexible Umfangswand durch die Quetschmittel zusammengequetscht wird im Vergleich zum schlauchförmigen Ventilglied aus dem Stand der Technik deutlich verkürzt, der Stützkörper liegt mit einem deutlich größeren Bereich an der Umfangswand an und stützt diese ab, als im Vergleich zum Stand der Technik. Durch diese vergrößerte Abstützfläche wird das Problem des Flatterns weitestgehend vermieden. Die flexible Umfangswand des schlauchförmigen Ventilglieds wird also formschlüssig unterstützt bzw. abgestützt.

Bei einer Weiterbildung der Erfindung sind zwei sich diametral gegenüberliegende Durchbrechungen für die Quetschmittel vorgesehen.

Bei einer Weiterbildung der Erfindung liegt die Umfangswand des Ventilglieds, wenn sie im Quetschraum durch die Quetschmittel zusammengequetscht wird, außerhalb der Ausweichräume im Wesentlichen über ihren gesamten Umfang, insbesondere vollumfänglich, an der Innenwandung des Stützrohrs an. Die Umfangswand kann also ringsum im Wesentlichen über ihren gesamten Umfang durch das Stützrohr abgestützt werden.

In besonders bevorzugter Weise liegt die Umfangswand über die gesamte Länge zwischen den Ausweichräumen und den Fixierabschnitten im Wesentlichen über ihren gesamten Umfang, insbesondere vollumfänglich, an der Innenwandung des Stützrohrs an. Zweckmäßigerweise löst sich die Umfangswand vom Stützrohr beim Zusammenquetschen lediglich im Bereich der Durchbrechungen und der Ausweichräume.

Bei einer Weiterbildung der Erfindung sind die Ausweichräume zumindest teilweise von einer geneigt in Richtung zum Fixierabschnitt und zugleich nach innen in Richtung Ventilglied-Längsachse verlaufenden Ausweichraum-Begrenzungsfläche begrenzt, an die sich eine geneigt in Richtung zum Fixierabschnitt und zugleich nach außen von der Ventilglied-Längsachse weg verlaufende Schlauchabstützfläche des Stützrohrs anschließt.

Es ist möglich, dass die Neigung der Ausweichraum-Begrenzungsfläche in Richtung Ventilglied-Längsachse nach innen steiler als die Neigung der Schlauchabstützfläche von der Ventilglied-Längsachse weg nach außen ist.

Bei einer Weiterbildung der Erfindung weist das schlauchförmige Ventilglied im Bereich der Fixierabschnitte einen Schlauchdurchmesser D auf, und die Länge eines der sich entlang der Ventilglied-Längsachse erstreckenden Ausweichsraums beträgt L/2, wobei Ausweichraumlänge L/2 und Schlauchdurchmesser D in folgender Beziehung zueinander stehen: L < 1,5*D.

In besonders bevorzugter Weise lautet die Beziehung Ausweichraum-Länge L/2 und Schlauchdurchmesser D folgendermaßen: L < 1,2*D.

Bei einer Weiterbildung der Erfindung ist die mindestens eine radiale Durchbrechung als Fluidkanal ausgebildet, durch den hindurch ein als Quetschmittel fungierendes fluidisches Druckmedium in den Bereich des Außenumfangs der Umfangswand des Ventilglieds leitbar ist. Als Quetschmittel fungiert hier also ein Druckfluid, insbesondere Druckluft.

Alternativ ist es möglich, dass die mindestens eine radiale Durchbrechung eine Durchgriffsöffnung ist, durch die hindurch ein als Quetschmittel fungierendes, bezüglich der Ventilglied-Längsachse radial bewegliches Quetschelement mechanisch auf die Umfangswand des Ventilglieds einwirken kann. In diesem Fall sind die Quetschmittel als mechanische Quetschelemente ausgebildet, beispielsweise in Form von Stempeln.

Bei einer Weiterbildung der Erfindung besteht das Stützrohr aus mehreren in der Umfangsrichtung der Umfangswand des Ventilglieds um die Umfangswand herum aneinander gereihten, jeweils einen bogenförmigen Querschnitt aufweisenden Schalenelementen, die in bezüglich der Ventilglied-Längsachse radialer Richtung außen an das schlauchförmige Ventilglied angesetzt sind.

Alternativ ist es jedoch auch möglich, dass Stützrohr aus einem Stück herzustellen, beispielsweise im 3D-Druckverfahren.

Bevorzugte Ausführungsbeispiele der Erfindung sind in der Zeichnung dargestellt und werden im Folgenden näher erläutert. Die Zeichnungen zeigen:
- Figur 1: eine perspektivische, teilweise aufgeschnittene Ansicht eines ersten Ausführungsbeispiels des erfindungsgemäßen Quetschventils,
- Figur 2: eine Stirnansicht auf das Quetschventil von Figur 1,
- Figur 3: einen Längsschnitt durch das Quetschventil entlang der Linie III-III aus Figur 2,
- Figur 4: einen Längsschnitt durch das Quetschventil entlang der Linie IV-IV aus Figur 2,
- Figur 5: eine perspektivische teilweise aufgeschnittene Darstellung eines zweiten Ausführungsbeispiels des erfindungsgemäßen Quetschventils,
- Figur 6: eine Stirnansicht des Quetschventils von Figur 5,
- Figur 7: einen Längsschnitt durch das Quetschventil entlang der Linie VII-VII von Figur 6,
- Figur 8: einen Längsschnitt durch das Quetschventil entlang der Linie VIII-VIII von Figur 6,
- Figur 9: einen Längsschnitt durch das Quetschventil analog Figur 7, wobei das schlauchförmige Ventilglied zusammengequetscht ist und
- Figur 10: einen Längsschnitt analog Figur 1, wobei das schlauchförmige Ventilglied zusammengequetscht ist und sich in die Ausweichräume ausgedehnt hat.

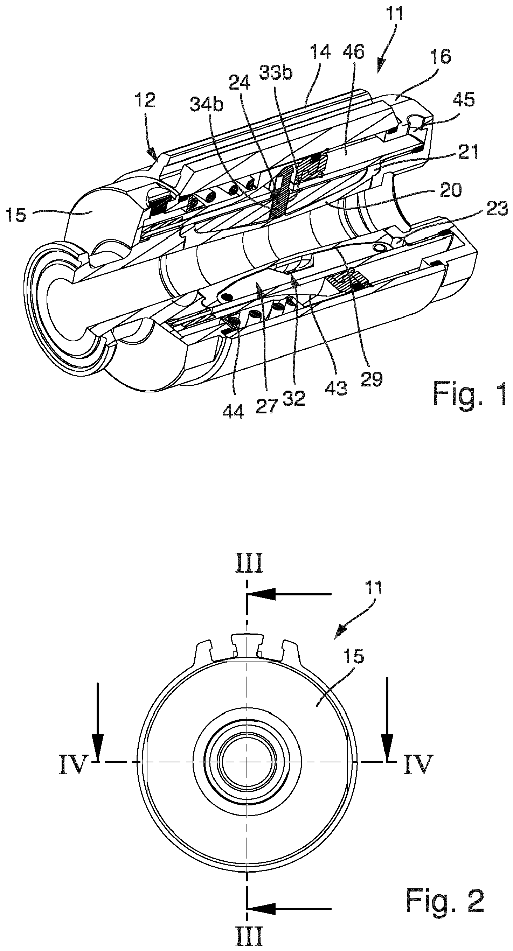

Die Figuren 1 bis 4 zeigen ein erstes Ausführungsbeispiel des erfindungsgemäßen Quetschventils 11.

Das Quetschventil 11 besitzt ein Ventilgehäuse 12, das einen Aufnahmeraum 13 umgibt. Bevorzugt umfasst das Ventilgehäuse 12 ein rohrförmiges Gehäusehauptteil 14, an dessen beiden Stirnseiten je eine Deckelfunktion übernehmendes Anschlussstück 15, 16 angeordnet ist. Wenigstens eines und zweckmäßigerweise beide Anschlussstücke 15, 16 sind bezüglich des Gehäusehauptteils 14 separate Komponenten und lösbar an dem Gehäusehauptteil 14 angebracht. Beispielhaft sind sie jeweils stirnseitig in das Gehäusehauptteil 14 eingeschraubt. Die hierbei miteinander kooperierenden Innen- und Außengewinde sind bei 17 angedeutet.

Jedes Anschlussstück 15, 16 ist mit einem Fluidanschluss 18 ausgestattet, der von einem axialen Durchgangskanal gebildet ist. Ihnen zugeordnete Anschlussmittel 19, beispielsweise Innengewinde, ermöglichen das Anschließen nicht näher gezeigter Fluidleitungen, über die ein durch das Quetschventil 11 zu steuerndes, im Folgenden vereinfacht als "Fluid" bezeichnetes fließfähiges Medium zu- und abführbar ist. Das Quetschventil 11 ist zur Steuerung des Durchflusses von sowohl gasförmigen als auch flüssigen Medium geeignet.

In den Aufnahmeraum 13 erstreckt sich zwischen den beiden Anschlussstücken 15, 16 ein eine flexible, bevorzugt gummielastische Umfangswand 20 aufweisendes schlauchförmiges Ventilglied 21. Das Ventilglied 14 ist von einem Steuerkanal 22 koaxial durchsetzt, der mit den beiden Fluidanschlüssen 18 in Verbindung steht.

An seinen beiden Enden, im Anschluss an die Umfangswand 20, besitzt das schlauchförmige Ventilglied 21 je einen radial abstehenden, bevorzugt ringförmigen, flanschartigen Fixierabschnitt 23. Er besteht zweckmäßigerweise aus dem gleichen Material wie die Umfangswand 20. Bevorzugt ist das schlauchförmige Ventilglied 21 insgesamt ein einstückiges Element.

Die Fixierabschnitte 23 liegen, um die Mündung des jeweils zugeordneten Fluidanschlusses 18 herum, unter Abdichtung an den beiden Anschlussstücken 15, 16 an. Dadurch ergibt sich eine durchgängig abgedichtete Verbindung.

Über je einen der Fluidanschlüsse 18 kann ein zu steuerndes Fluid, also beispielsweise Gas oder Flüssigkeit, eingespeist werden, das durch den Steuerkanal 22 hindurch zum jeweils anderen Fluidanschluss 18 gelangt und über diesen das Quetschventil 11 wieder verlässt. Durch ein oder mehrere Quetschmittel 24 kann die Umfangswand 20 mehr oder weniger stark zusammengequetscht werden, um den von dem Steuerkanal 22 zur Verfügung gestellten Durchflussquerschnitt zu verändern.

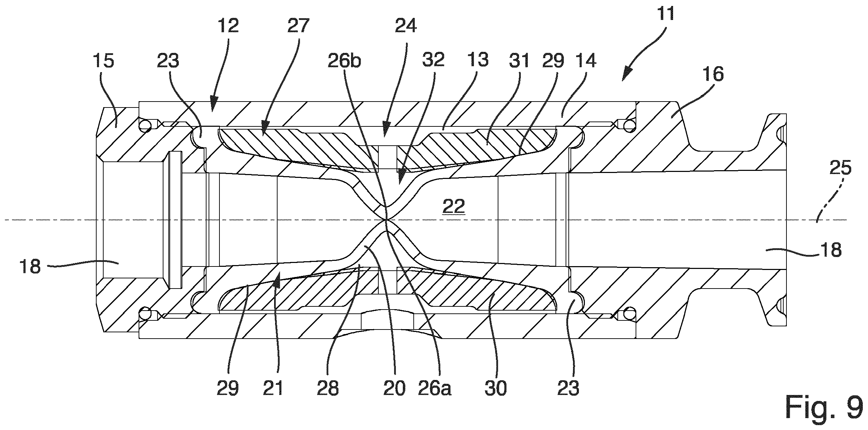

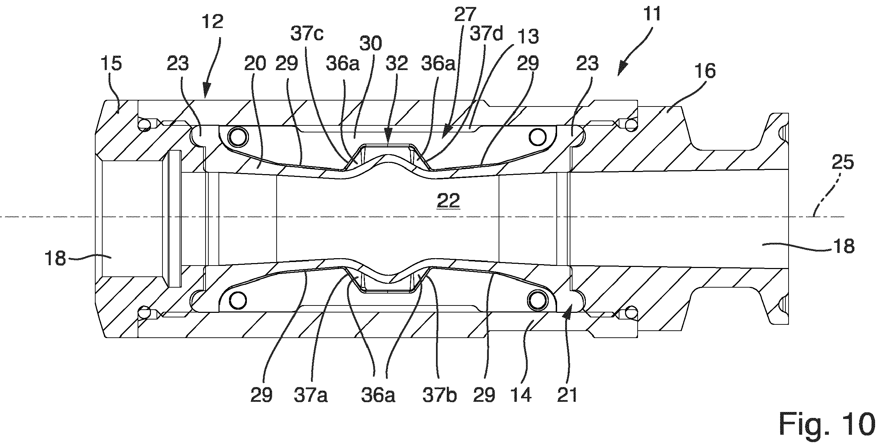

Wird keine Quetschkraft aufgebracht, liegt die aus Figur 1, 3 und 4 ersichtliche maximale Offenstellung vor, in der dem Fluid der maximale Durchflussquerschnitt zur Verfügung steht. Die Figuren 9 und 10 zeigen anhand eines nachfolgend noch näher beschriebenen zweiten Ausführungsbeispiels des erfindungsgemäßen Quetschventils 11 eine Schließstellung, in der die Umfangswand 20 durch das oder die Quetschmittel 24 soweit zusammengequetscht ist, dass sich quer zur Ventilglied-Längsachse 25 gegenüberliegende Wandabschnitte 26a, 26b (Fig. 9) dichtend aneinander liegen und den Durchgang durch den Steuerkanal 22 versperren.

Durch Variation der Quetschkraft lassen sich auch Zwischenstellungen vorgeben, in denen der Durchflussquerschnitt zwischen Null und dem Maximum liegt.

Bei dem schlauchförmigen Ventilglied 21 handelt es sich vorzugsweise um ein gummielastisches Formteil, dessen Umfangswand 20 im nicht radial beaufschlagten Ausgangszustand allein aufgrund der eigenen Formstabilität eine von axial außen her zu ihrem längsmittigen Bereich in sich verjüngende Formgebung aufweist. Der Querschnitt der Umfangswand 20 kann daher länglich ausgebildet sein.

Im Betrieb wird die Umfangswand 20 des schlauchförmigen Ventilglieds 21 von dem im Steuerkanal 22 strömenden Druckmedium im Sinne einer radialen Aufweitung beaufschlagt. Ein das Ventilglied 21 zumindest im Bereich der Umfangswand 20 koaxial umschließendes starres Stützrohr 27 verhindert dabei ein Überdehnen des flexiblen Materials und gibt insbesondere die von der Umfangswand 20 in der maximalen Offenstellung eingenommene Außenkontur vor.

Der Innenraum des Stützrohres 27, als Rohrkanal 28 (Fig. 9) bezeichnet, ist von dem Ventilglied 21 koaxial durchsetzt, wobei seine Innenfläche eine Umfangswand-Abstützfläche 29 für die Umfangswand 20 des schlauchförmigen Ventilglieds 21 bildet. Zweckmäßigerweise ist der Rohrkanal 28 derart gestaltet, dass eine Innenkontur der im unbeaufschlagten Ausgangszustand vorliegenden Außenkontur der Umfangswand 20 entspricht. Dies hat zur Folge, dass die Umfangswand 20 bei Fluidbeaufschlagung des Steuerkanals 22 über ihren Ausgangszustand hinaus praktisch nicht radial ausgedehnt wird. Somit wird die Umfangswand 20 ausgehend von der Neutralstellung immer nur zu einer radialen Seite hin verformt, was der Lebensdauer zu Gute kommt. Alternativ ist es auch denkbar, dass die Innenkontur des Rohrkanals 28 so gestaltet ist, dass die Umfangswand 20 etwas nach radial innen gequetscht wird. Somit wird gewährleistet, dass bei einer nachfolgend noch beschriebenen Ausführungsform des Stützrohrs die Umfangswand in jedem Fall an der Umfangswand-Abstützfläche des Stützrohrs anliegt.

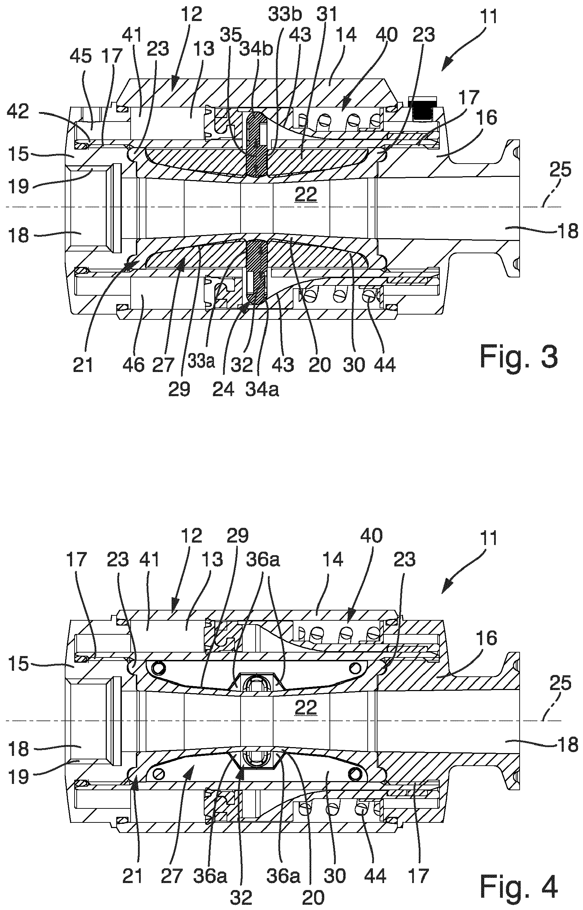

Wie insbesondere in den Figuren 1 und 4 gezeigt, handelt es sich bei dem Stützrohr 27 nicht um einen einstückigen sondern um einen in seiner Umfangsrichtung segmentierten Rohrkörper. Er setzt sich aus mehreren in der Umfangsrichtung der Umfangswand 20 und diese herum aneinander gereihten von radial außen her an den Außenumfang des Ventilglieds 21 angesetzten Schalenelementen 30, 31 zusammen. Die Schalenelemente 30, 31 haben jeweils einen bogenförmigen Querschnitt, so dass sie im montierten Zustand die Rohrstruktur des Stützrohrs 27 definieren.

Zumindest außen ist das zusammengesetzte Stützrohr 27 im Wesentlichen kreiszylindrisch gestaltet.

Obgleich das Stützrohr 27 durch mehr als zwei Schalenelemente 30, 31 realisiert werden könnte, empfiehlt sich die Variante des Ausführungsbeispiels, bei der sich das Stützrohr 27 aus lediglich zwei Schalenelementen 30, 31 zusammensetzt, die jeweils in der Umfangsrichtung eine Bogenerstreckung von 180° aufweisen. Man kann hier von zwei Halbschalen sprechen.

Damit ein oder mehrere Quetschmittel 24 ungehindert auf den Außenumfang der Umfangswand 20 einwirken können, ist die Wandung des Stützrohres 27 von wenigstens einer in einen Quetschraum 32 einmündenden radialen Durchbrechung radial durchsetzt, so dass das oder die Quetschmittel 24 hindurchtreten können. Zweckmäßigerweise sind zwei sich diametral gegenüberliegenden Durchbrechungen 33a, 33b vorgesehen. Die Anzahl der zu einander korrespondierenden Durchbrechungen 33a, 33b kann auch größer als zwei sein.

Gemäß erstem Ausführungsbeispiel des erfindungsgemäßen Quetschventils 11 fungieren die Durchbrechungen 33a, 33b als Durchgriffsöffnungen, in denen je ein als Quetschmittel dienendes gegenständliches Quetschelement 34a, 34b, beispielsweise als Stempel ausgebildet, gemäß Doppelpfeil 35 radial verschiebbar gelagert ist. Diese Quetschelemente 34a, 34b können mechanisch auf die Umfangswand 20 einwirken, um in einem Quetschraum 32 die erforderliche Quetschkraft auszuüben.

Da sich die Umfangswand 20 beim Zusammenquetschen, wenn die Quetschkraft von oben und unten durch die Quetschelemente 34a, 34b aufgebracht wird, in der Breite ausdehnt, besteht der Bedarf, dass das Stützrohr 27 derart gestaltet ist, dass die Breitenausdehnung der Umfangswand 20 aufgefangen wird.

Hierzu ist vorgesehen, dass sich quer zur Quetschrichtung beidseits der Ventilglied-Längsachse 25 angeordnete, sich entlang der Ventilglied-Längsachse 25, in Richtung zu einem der Fixierabschnitte 23 erstreckende Ausweichräume 36a, 36b zur Aufnahme des zusammengequetschten Teils der Umfangswand 20 anschließt.

Dies ist insbesondere in Figur 10 veranschaulicht, wenngleich diese Figur dem nachfolgend noch beschriebenen zweiten Ausführungsbeispiel zugeordnet ist. Jedoch dehnt sich die Umfangswand 20 beim Zusammenquetschen durch die Quetschelemente 34a, 34b gemäß erstem Ausführungsbeispiel in analoger Weise zum zweiten Ausführungsbeispiel quer zur Quetschrichtung aus.

Die radialen Durchbrechungen 34a, 34b im Stützrohr 27 und die Quetschfläche der Quetschelemente 34a, 34b, mit denen auf die Umfangswand 20 gedrückt wird, sind dabei auf die Breitenausdehnung des schlauchförmigen Ventilglieds 21 derart angepasst, dass die Umfangswand 20 im Bereich der Quetschelemente 34a, 34b nicht seitlich links und rechts über die Quetschelemente 34a, 34b hinaussteht, da sonst keine mediumdichte Abdichtung gewährleistet ist.

Daher ist es der Fall, dass sich die Ausweichräume 36a, 36b zur Aufnahme des über die ursprüngliche Breitenausdehnung hinausstehenden Teils der Umfangswand, wenn diese gequetscht wird, jeweils beidseits der Durchbrechungen 33a, 33b in Richtung zu einem der Fixierabschnitte 23 erstrecken.

Es sind also insgesamt zwei Ausweichräume 36a, 36b vorgesehen, von denen zwei links und rechts der Durchbrechung 33a, 33b angeordnete Teilabschnitte des ersten Ausweichraums 36a sich diesseits und zwei links und rechts der Durchbrechung 33a, 33b angeordnete Teilabschnitte des zweiten Ausweichsraums 36b jenseits der Ventilglied-Längsachse 25 angeordnet sind. Dabei ist ein Teilabschnitt des ersten Ausweichraumes 36a und Teilabschnitt des zweiten Ausweichraumes 36b dem einen Fixierabschnitt 23 und entsprechend die beiden anderen Teilabschnitte dem zweiten Fixierabschnitt 23 zugeordnet.

Um ein Flattern des schlauchförmigen Ventilglieds zu verhindern, insbesondere wenn eine Quetschkraft aufgebracht wird, so dass eine Zwischenstellung vorgegeben wird, in denen der Durchflussquerschnitt zwischen Null und dem Maximum liegt, enden die Ausweichräume 36a, 36b jeweils mit Abstand vor den Fixierabschnitten 23.

Das heißt, der Bereich, an dem sich die Umfangswand 20 vom Stützrohr 27 löst ist auf einen kleinen Bereich um dem Quetschraum 32 herum begrenzt, während die Umfangswand 20 auch wenn sie im Bereich der Quetschmittel 24 vollständig zusammengequetscht ist ansonsten am Stützrohr 27 anliegt.

Die Umfangswand 20 des Ventilglieds 14 wird, wenn sie im Quetschraum 32 durch die Quetschmittel 24 zusammengequetscht wird, außerhalb der Ausweichräume 36a, 36b im Wesentlichen über ihrem gesamten Umfang, insbesondere vollumfänglich, an der Innenwandung des Stützrohrs 27 abgestützt. Zweckmäßigerweise wird die Umfangswand 20 über die gesamte Länge zwischen den Ausweichräumen 36a, 36b und den Fixierabschnitten 23 vollumfänglich an der Innenwandung des Stützrohrs 27 abgestützt.

Um eine maximale Abstützung der Umfangswand 20 am Stützrohr 27 zu erzielen, ist das Stützrohr im Bereich der Durchbrechungen und der Ausweichräume charakteristisch gestaltet.

Wie insbesondere in Figur 10 gezeigt, sind die Ausweichräume 36a, 36b jeweils zumindest teilweise von einer geneigt in Richtung zugeordnetem Fixierabschnitt 23 und zugleich nach innen in Richtung Ventilglied-Längsachse 25 verlaufende Ausweichraum-Begrenzungsfläche 37a-d begrenzt, an die sich eine geneigt in Richtung zum Fixierabschnitt 23 und zugleich nach außen von der Ventilglied-Längsachse 25 weg verlaufende Umfangswand-Abstützfläche 29 anschließt.

Die Neigung der Ausweichraum-Begrenzungsfläche 37a-d in Richtung Ventilglied-Längsachse 25 nach innen kann steiler als die Neigung der Umfangswand-Abstützfläche 29 von der Ventilglied-Längsachse 25 weg nach außen sein.

Es kann daher ein relativ scharfer Übergang zwischen der Ausweichraum-Begrenzungsfläche 37a-d und der sich Richtung zugeordnetem Fixierabschnitt 23 anschließenden Umfangswand-Abstützfläche 29 gebildet werden.

Das schlauchförmige Ventilglied 21 weist im Bereich der Fixierabschnitte 23 einen Schlauchdurchmesser D auf und die Länge des sich entlang der Ventilglied-Längsachse 25 erstreckenden Ausweichraums 36a-d beträgt L/2, wobei AusweichraumLänge L/2 und Schlauchdurchmesser D in folgender Beziehung zueinanderstehen: L < 1,5*D, vorzugsweise L < 1,2*D.

Die radiale Stellkraft zur Betätigung der Quetschelemente 34a, 34b liefert bevorzugt eine ringförmige Beaufschlagungseinrichtung 40, die in einem im Ventilgehäuse 12 ausgebildeten Ringraum 41 koaxial um das Stützrohr 27 herum in axial bewegbarer Weise angeordnet ist. Der Rohrabschnitt 42, in dem der Ringraum 41 angeordnet ist, bildet hierbei ein Führungselement für eine axial verschiebbare Lagerung der Beaufschlagungseinrichtung 40.

An der Beaufschlagungseinrichtung 40 angeordnete schräge Beaufschlagungsflächen 43 übergreifen die Quetschelemente 34a, b radial außen und drücken diese in Abhängigkeit von der Axialposition der Beaufschlagungseinrichtung 40 mehr oder weniger weit nach radial innen.

Eine ebenfalls in dem Ringraum 41 angeordnete mechanische Federeinrichtung 44 wirkt ständig in einem dahingehenden Sinne auf die Beaufschlagungseinrichtung 40 ein, dass diese die Quetschelemente 34a, 34b in Richtung der Schließstellung vorspannt. Dieses Quetschventil ist vom Typ "normalerweise geschlossen (normally closed) und nimmt die Schließstellung ein, so lang kein Betätigungssignal ansteht.

Als Betätigungssignal wird gemäß erstem Ausführungsbeispiel über einen das Ventilgehäuse 12 durchsetzenden Betätigungskanal 45 ein fluidisches Druckmedium in eine Betätigungskammer 46 eingespeist, die durch die Beaufschlagungseinrichtung 40 innerhalb des Ringraums 41 fluiddicht abgeteilt ist.

Das mit ausreichend hohem Druck in die Betätigungskammer 46 zugeführte Betätigungsfluid kann die Beaufschlagungseinrichtung 40 entgegen der Federkraft verschieben, so dass sich die Quetschelemente 34a, b zur Freigabe des Steuerkanals 22 nach radial außen bewegen können.

Die die Federkraft überwindende Stellkraft könnte auch auf andere Weise als durch eine fluidische Kraft aufgebracht werden, beispielsweise elektrisch oder manuell.

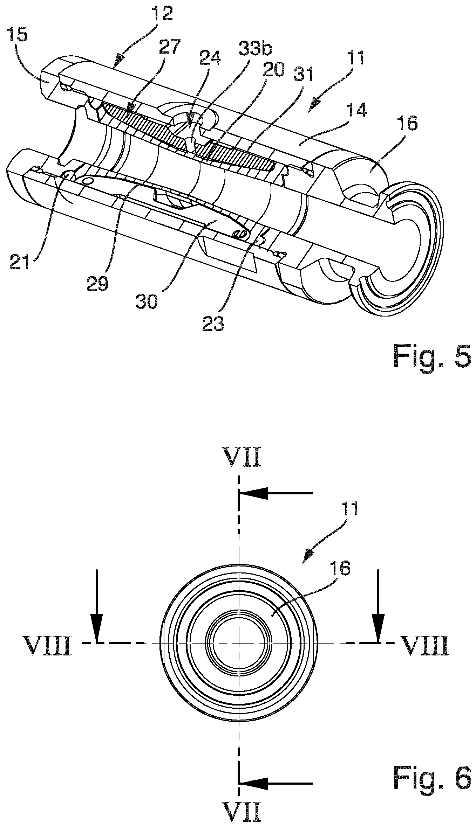

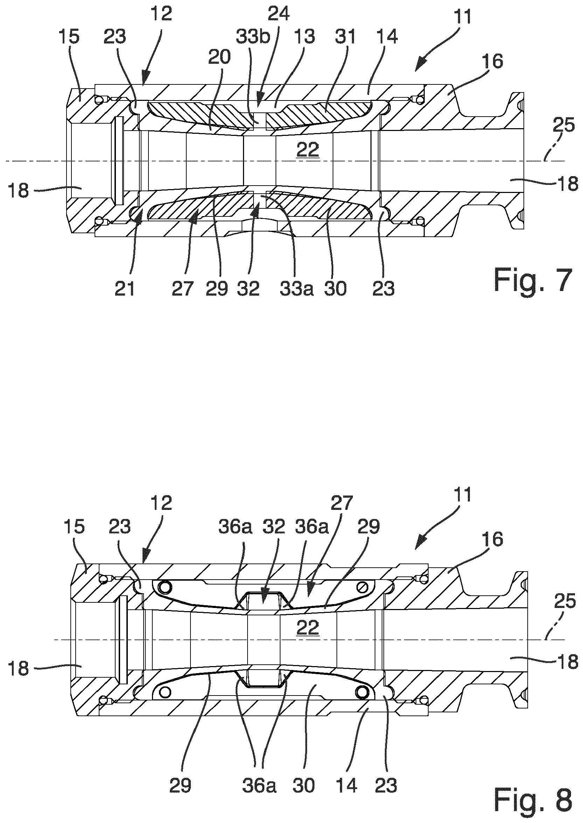

Die Figuren 5 bis 10 zeigen ein zweites Ausführungsbeispiel des erfindungsgemäßen Quetschventils 11.

Im Gegensatz zu dem zuvor beschriebenen ersten Ausführungsbeispiel ist das Quetschventil 11 gemäß dem zweiten Ausführungsbeispiel vom Typ "normalerweise offen (normally open)". Hier liegt der maximale Durchflussquerschnitt des Steuerkanals 22 vor, wenn über den Betätigungskanal 45 kein Druckmedium eingespeist wird und somit kein Betätigungssignal ansteht.

Gemäß zweitem Ausführungsbeispiel besteht das Quetschmittel aus einem Druckmedium, das über einen das Ventilgehäuse 12 durchsetzenden Betätigungskanal 45 hindurch in den Aufnahmeraum 13 eingespeist werden kann. Hier fungiert dann die wenigstens eine Durchbrechung, insbesondere die beiden sich diametral gegenüberliegenden Durchbrechungen 33a, 33b, als Fluidkanal 47, durch den hindurch das zur Betätigung verwendete Druckmedium in den Rohrkanal 28 einströmen kann, um die Umfangswand 20 mit einer fluidischen Klemmkraft zu beaufschlagen.

Die Ausgestaltung des Stützrohrs mit den Ausweichräumen 36a, 36b ist im Wesentlichen identisch zu dem Stützrohr des ersten Ausführungsbeispiels. Lediglich die Gestaltung der Durchbrechungen 33a, b ist anders ausgebildet, da diese zur Zuführung von Druckluft mit kleinerem Querschnitt ausgestaltet sein können als die Durchbrechungen gemäß dem ersten Ausführungsbeispiel, die von den Quetschelementen 34a, 34b durchsetzt sind.

## Patentansprüche

1. Quetschventil, mit einem Ventilgehäuse (12), in dem sich zwischen zwei Fluidanschlüssen (18) ein eine flexible Umfangswand (20) aufweisendes schlauchförmiges Ventilglied (21) erstreckt, das zwei an einander entgegengesetzten Enden des Ventilglieds (21) ausgebildete ringförmige Fixierabschnitte (23) aufweist, die jeweils im Bereich der Fluidanschlüsse (18) fixiert sind und zwischen denen sich die flexible Umfangswand (20) erstreckt, wobei die Umfangswand (20) in einer Quetschrichtung quer zur Ventilglied-Längsachse (25) mittels Quetschmitteln (24) in einem Quetschraum (32) zusammenquetschbar ist, um den Durchflussquerschnitt zu verändern, und wobei das Ventilglied (21) von einem seine radiale Aufweitung begrenzenden starren Stützrohr (27) umschlossen ist, das wenigstens eine in den Quetschraum (32) einmündende radiale Durchbrechungen (33a, b) für die Quetschmittel aufweist, wobei quer zur Quetschrichtung beidseits der Ventilglied-Längsachse (25) angeordnete, sich entlang der Ventilglied-Längsachse (25), in Richtung zu einem der Fixierabschnitte (23) erstreckende Ausweichräume (36a, b) zur Aufnahme eines zusammengequetschten Teils des Umfangswand (20) ausgebildet sind, **dadurch gekennzeichnet, dass** die Ausweichräume (36a, b) jeweils mit Abstand vor den Fixierabschnitten (23) enden.

2. Quetschventil nach Anspruch 1, **dadurch gekennzeichnet, dass** zwei sich diametral gegenüberliegende Durchbrechungen (33a, b) für die Quetschmittel vorgesehen sind.

3. Quetschventil nach Anspruch 1 oder 2, **dadurch gekennzeichnet, dass** die Umfangswand (20) des Ventilglieds (21), wenn sie im Quetschraum (32) durch die Quetschmittel zusammengequetscht wird, außerhalb der Ausweichräume (36a, b) im Wesentlichen über ihren gesamten Umfang an der Innenwandung des Stützrohrs (27) anliegt.

4. Quetschventil nach Anspruch 3, **dadurch gekennzeichnet, dass** die Umfangswand (20) über die gesamte Länge zwischen den Ausweichräumen (36a, b) und den Fixierabschnitten (23) im Wesentlichen über ihren gesamten Umfang an der Innenwandung des Stützrohrs (27) anliegt.

5. Quetschventil nach einem der vorhergehenden Ansprüche, **dadurch gekennzeichnet**, die Ausweichräume (36a, b) jeweils zumindest teilweise von einer geneigt in Richtung zum Fixierabschnitt (23) und zugleich nach innen in Richtung Ventilglied-Längsachse (25) verlaufenden Ausweichraum-Begrenzungsfläche (37a-d) begrenzt sind, an die sich eine geneigt in Richtung zum Fixierabschnitt (23) und zugleich nach außen von der Ventilglied-Längsachse (25) weg verlaufende Umfangswand-Abstützfläche (29) des Stützrohrs (27) anschließt.

6. Quetschventil nach einem der vorhergehenden Ansprüche, **dadurch gekennzeichnet, dass** das schlauchförmige Ventilglied (21) im Bereich der Fixierabschnitte (23) einen Schlauchdurchmesser (D) aufweist und die Länge des sich entlang der Ventilglied-Längsachse (25) erstreckenden Ausweichraums L/2 beträgt, wobei Ausweichraum-Länge (L/2) und Schlauchdurchmesser (D) in folgender Beziehung zueinander stehen: L < 1,5*D.

7. Quetschventil nach Anspruch 6, **dadurch gekennzeichnet, dass** die Beziehung Ausweichraum-Länge (L/2) und Schlauchdurchmesser (D) folgendermaßen lautet: L < 1,2*D.

8. Quetschventil nach einem der vorhergehenden Ansprüche, **dadurch gekennzeichnet, dass** die wenigstens eine radiale Durchbrechung (33a, b) als Fluidkanal ausgebildet ist, durch den hindurch ein als Quetschmittel fungierendes fluidisches Druckmedium in den Bereich des Außenumfangs der Umfangswand (20) des Ventilglieds (21) leitbar ist.

9. Quetschventil nach einem der Ansprüche 1 bis 7, **dadurch gekennzeichnet, dass** die wenigstens eine radiale Durchbrechung (33a, b) eine Durchgriffsöffnung ist, durch die hindurch ein als Quetschmittel fungierendes, bezüglich der Ventilglied-Längsachse (25) radial bewegliches Quetschelement (34a, b) mechanisch auf die Umfangswand (20) des Ventilglieds (21) einwirken kann.
